# EUROPÄISCHE PATENTANMELDUNG

(11) **EP 4 760 635 A1**
(43) Veröffentlichungstag der Anmeldung: **17.06.2026**
(21) Anmeldenummer: 25221392.1
(22) Anmeldetag: 08.12.2025
(51) Int. Cl.: G06T 7/246

(54) **VERFAHREN ZUM PROZESSIEREN DIGITALER BILDZEILENDATEN EINER TDI-ZEILENKAMERA**

(30) Priorität: 13.12.2024 DE 102024137686
(71) Anmelder: ISRA VISION GMBH, 64293 Darmstadt (DE)
(72) Erfinder: PROBST, Christian, 80689 München (DE); KUHLBRODT, Björn, 81373 München (DE); ALSWEIS, Monssef, 80689 München (DE); MÜLLER, Manuel, 85276 Hettenshausen (DE)
(74) Vertreter: WSL Patentanwälte Partnerschaft mbB

(57) **Zusammenfassung**

Die vorliegende Erfindung betrifft ein computer-implementiertes Verfahren zum Prozessieren von digitalen Bildzeilendaten, die von einer Zeilenkamera, insbesondere einer TDI-Zeilenkamera, durch das Belichten eines Objektes, das sich zumindest temporär relativ zur Zeilenkamera bewegt, erzeugt worden sind. Die so erzeugten Daten umfassen eine Vielzahl eindimensionaler und mit einer zeitlichen Abfolge versehener Bildzeilen.

## Beschreibung

Die vorliegende Erfindung betrifft ein computer-implementiertes Verfahren zum Prozessieren von digitalen Bildzeilendaten, die von einer Zeilenkamera, insbesondere einer TDI-Zeilenkamera, durch das Belichten eines Objektes, das sich zumindest temporär relativ zur Zeilenkamera bewegt, erzeugt worden sind. Die so erzeugten Daten umfassen eine Vielzahl eindimensionaler und mit einer zeitlichen Abfolge versehener Bildzeilen.

Die vorliegende Erfindung betrifft weiter ein Datenverarbeitungssystem zur Ausführung des computer-implementierten Verfahrens sowie prozessierte Bildzeilendaten, die durch das computer-implementierte Verfahren erhältlich sind.

Darüber hinaus betrifft die vorliegende Erfindung ein Verfahren zum Analysieren eines sich relativ zu einer Zeilenkamera, insbesondere einer TDI-Zeilenkamera, bewegenden Objektes.

Die vorliegende Erfindung betrifft weiter eine Vorrichtung und ein System zum Analysieren eines sich relativ zu einer Zeilenkamera, insbesondere einer TDI-Zeilenkamera, bewegenden Objektes.

Zeilenkameras kommen häufig bei der Qualitätsüberwachung eines Herstellungs- oder Bearbeitungsprozesses von verschiedensten Materialien zum Einsatz, die beispielsweise auf einem Förderband durch eine Produktionsstraße bewegt werden. Eigenschaften der Objekte, wie etwa die Oberflächenbeschaffenheit, werden dabei zeilenweise erfasst und in Bildzeilen gewandelt. Herkömmliche Zeilenkamera können jedoch eine sichere Qualitätsüberwachung eines Objektes nur für begrenzte Geschwindigkeiten ermöglichen. Bewegen sich die Objekte sehr schnell, ist die Auflösung oder Lichtempfindlichkeit der Zeilenkameras häufig nicht ausreichend.

Werden die Objekte, wie im industriellen Umfeld häufig üblich, mit sehr schneller Geschwindigkeit relativ zur Kamera bewegt oder sind nur schwache Lichtverhältnisse gegeben, bieten sogenannte Time Delay and Integration Zeilenkameras, kurz TDI-Zeilenkameras, ein besseres Signal-zu-Rausch-Verhältnis. Im Gegensatz zu herkömmlichen Zeilenkameras verfügen die TDI-Zeilenkameras über mehrere Pixelzeilen, sodass gleichzeitig mehrere Bildzeilen erfasst werden. Durch eine Synchronisation der Bewegung des Objektes mit der Bewegung der Abbildung auf dem Sensor der TDI-Kamera, werden einzelne Objektpunkte länger integriert, wodurch genauere Aufnahmen des Objektes trotz hoher Geschwindigkeiten oder schwacher Lichtverhältnisse möglich sind.

Insbesondere eine TDI-Kamera ist jedoch ununterbrochen im Belichtungszustand, um sicherzustellen, dass das Bild ohne Unterbrechung aufgenommen wird. Eine kontinuierliche Synchronisation für die Erzeugung der Bildzeilen ist essentiell, um die Daten korrekt weiterzuleiten und zu summieren.

Die Synchronisation der Kamera mit der Bewegung des Objektes und der ununterbrochene Belichtungszustand bringen jedoch den Nachteil mit sich, dass Änderungen der Geschwindigkeit oder ein Stillstand des Objektes zu einem veränderten Bildrauschen und einer veränderten Helligkeit führen. Gerade für die Qualitätsüberwachung von Produkten, die schubweise fortbewegt werden, ist die Überwachung mit einer TDI-Zeilenkamera daher schwierig bis unmöglich. Solche Produkte können beispielsweise Solarpaneele sein.

Der vorliegenden Erfindung liegt daher die Aufgabe zugrunde ein computer-implementiertes Verfahren zum Prozessieren von digitalen Bildzeilendaten, ein entsprechendes Datenverarbeitungssystem sowie ein Verfahren zum Analysieren eines sich bewegenden Objektes mit einer Zeilenkamera bzw. entsprechend prozessierte Bildzeilendaten bereitzustellen, bei welchen eine Geschwindigkeitsänderung eines mit hoher Geschwindigkeit transportierten Objektes einen geringeren oder keinen Einfluss auf die Qualitätsüberwachung hat.

Der vorliegenden Erfindung liegt weiterhin die Aufgabe zugrunde, eine Vorrichtung und ein System bereitzustellen, die die zuvor genannten Verfahren ermöglichen.

Diese Aufgabe wird gelöst durch ein computer-implementiertes Verfahren zum Prozessieren von digitalen Bildzeilendaten, die von einer Zeilenkamera, insbesondere TDI-Zeilenkamera, durch das Belichten eines Objektes, das sich zumindest temporär relativ zur Zeilenkamera, bewegt, erzeugt worden sind, sodass die Bildzeilendaten eine Vielzahl eindimensionaler und mit einer zeitlichen Abfolge versehender Bildzeilen umfassen, mit den Schritten:
A) Bestimmen, ob eine Relativgeschwindigkeit des Objektes gegenüber der Zeilenkamera während dem Belichten durch die Zeilenkamera eine vordefinierte Geschwindigkeitsuntergrenze unterschritten hat;
B) Prozessieren der Bildzeilendaten in Abhängigkeit davon, ob für eine Bildzeile ein Unterschreiten der vordefinierten Geschwindigkeitsuntergrenze in Schritt A) festgestellt worden ist;
C) Bereitstellen der mittels Schritt B) prozessierten Bildzeilendaten.

Das erfindungsgemäße computer-implementierte Verfahren unterscheidet bei der Prozessierung der erzeugten Bildzeilendaten also zwischen solchen Pixeldaten, die während einer entsprechend schnellen Bewegung des Objektes erfasst wurden und solchen Pixeldaten, die während einer Langsamfahrt oder während eines Stillstandes des Objektes erfasst wurden. Wird in Schritt A) des erfindungsgemäßen Verfahrens festgestellt, dass eine bestimmte Geschwindigkeitsuntergrenze unterschritten wird, erfolgt eine andere Prozessierung der Bildzeilendaten als im Normbetrieb der Zeilenkamera.

In einer Ausführungsform erfolgt das Bestimmen eines möglichen Unterschreitens der vordefinierten Geschwindigkeitsuntergrenze in Schritt A) in Abhängigkeit von zusätzlich erfassten Geschwindigkeitswerten und/oder Positionswerten des Objektes und/oder in Abhängigkeit von zusätzlich erfassten Geschwindigkeitswerten und/oder Positionswerten der Zeilenkamera.

Insbesondere werden die zusätzlich erfassten Geschwindigkeitswerte und/oder Positionswerte vorzugsweise mit einem Signalgeber, insbesondere Drehgeber, erfasst.

In einer weiteren Ausführungsform erfolgt das Bestimmen in Schritt A) kontinuierlich mit einer Monitoring-Frequenz, wobei in Schritt B) ein Signalprozessor in einer ersten Konfiguration betrieben wird, in der der Signalprozessor Beleuchtungsblitze und mit einer ersten Auslesefrequenz Bildzeileneinzüge auslöst, wenn in Schritt A) bestimmt wird, dass die Geschwindigkeitsuntergrenze nicht unterschritten ist, und wobei in Schritt B) ein Signalprozessor in einer zweiten Konfiguration betrieben wird, in der der Signalprozessor keinen Beleuchtungsblitz auslöst und mit einer zweiten Auslesefrequenz Bildzeileneinzüge auslöst, wenn in Schritt A) bestimmt wird, dass die Geschwindigkeitsuntergrenze unterschritten ist, wobei die zweite Auslesefrequenz größer, vorzugsweise zehnmal größer, als die erste Auslesefrequenz ist. Unter einem Bildzeileneinzug ist im Sinne der vorliegenden Erfindung der Beginn des Auslesens einer neuen eindimensionalen Pixelzeile zu verstehen.

In einer weiteren Ausführungsform erfolgt das Bestimmen eines möglichen Unterschreitens der vordefinierten Geschwindigkeit in Schritt A) in Abhängigkeit von den digitalen Bildzeilendaten, vorzugsweise ausschließlich in Abhängigkeit von den digitalen Bildzeilendaten. Zusätzliche Sensoren zur Erfassung der Geschwindigkeit des Objektes, sind damit nicht erforderlich, sodass das System zur Qualitätsüberwachung vereinfacht werden kann.

In einer weiteren Ausführungsform erfolgt das Prozessieren der Bilddaten in Schritt B) innerhalb der Zeilenkamera, vorzugsweise innerhalb eines Buffer-Speichers der Zeilenkamera, sodass die in Schritt B) prozessierten Bildzeilendaten als Ausgangsdaten der Zeilenkamera ausgebbar sind. So werden von der Kamera direkt nur Bildzeilendaten ausgegeben, die entsprechend bereinigt sind und keine Artefakte mehr enthalten, die aufgrund einer Langsamfahrt oder eines Stopps des Objektes entstanden sind. Die Prozessierung direkt in der Zeilenkamera bietet den Vorteil, dass alle notwendigen Daten untermittelbar zur Verfügung stehen und Übertragungszeiten wegfallen. Damit wird die Möglichkeit einer Echtzeitverarbeitung gegeben.

Alternativ erfolgt das Prozessieren der Bildzeilendaten in Schritt B) außerhalb der Zeilenkamera, vorzugsweise in unmittelbarer räumlicher Nähe zu einem bildgebenden Verfahren, mit welchem die Bildzeilendaten erzeugt werden, auf einem zusätzlichen physikalischen Datenträger. Es ist beispielsweise denkbar, dass die Bildzeilendaten in einer Cloud prozessiert werden.

In einer weiteren Ausführungsform umfasst das Prozessieren in Schritt B) zumindest folgende Unterschritte:
B1) Herausfiltern von Bildzeilen, für die die Relativgeschwindigkeit des Objektes kleiner als die vordefinierte Geschwindigkeitsuntergrenze ist;
B2) Zusammenfügen der nach dem in Schritt B1) erfolgten Herausfiltern übriggebliebenen Bildzeilen, um die prozessierten Bildzeilendaten zu erhalten.

Mit anderen Worten werden Bildzeilen, die während einer Geschwindigkeit unterhalb der Geschwindigkeitsuntergrenze erfasst worden, verworfen, sodass die prozessierten Bildzeilendaten nur noch Bildzeilen enthalten, die während einer Geschwindigkeit oberhalb der Geschwindigkeitsuntergrenze erfasst worden. Auf diese Weise ist der Einsatz einer Zeilenkamera, insbesondere einer TDI-Zeilenkamera auch für Objekte möglich, die schubweise fortbewegt werden und deren Stopp bei dem bisher bekannten Betrieb der TDI-Zeilenkamera zu einer Überbelichtung geführt hätten.

In einer weiteren Ausführungsform umfasst das Prozessieren in Schritt B) zumindest folgende Unterschritte:
B-i) Bestimmen einer Bildzeile innerhalb der zeitlichen Abfolge, bei der die Relativgeschwindigkeit des Objektes gegenüber der Zeilenkamera eine vordefinierte Geschwindigkeitsuntergrenze unterschritten hat;
B-ii) Herausfiltern der in Schritt B-i bestimmten Bildzeile und zumindest einer Bildzeile, die der in Schritt B-i bestimmten Bildzeile in der zeitlichen Abfolge unmittelbar zeitlich vor- oder nachsteht,
   wobei vorzugsweise mehrere Bildzeilen, insbesondere eine Anzahl an Bildzeilen ausgewählt aus dem geschlossenen Intervall zwischen 4 und der Gesamtanzahl von TDI-Levels der Zeilenkamera, herausgefiltert werden, wobei diese Anzahl an Bildzeilen der in Schritt B-i bestimmten Bildzeile in der zeitlichen Abfolge unmittelbar zeitlich vor- oder nachstehen.

Bildzeilen, die im Grenzbereich einer Langsamfahrt oder eines Stopps erfasst wurden, werden also entweder ebenfalls verworfen oder mit einer Korrekturfunktion verrechnet und anschließend zur Erstellung der Abfolge von Bildzeilendaten, d. h. zur Erstellung des zweidimensionalen Bildes, verwendet. Somit ist sichergestellt, dass eine ausreichende Korrektur der Bildzeilendaten erfolgt und sämtliche Artefakte aufgrund der Geschwindigkeitsänderung möglichst vollständig eliminiert werden. So werden Bildzeilendaten mit gleichmäßiger Helligkeit erzeugt.

Für die in Schritt B-ii herausgefilterten Bildzeilen gilt, dass bei diesen Bildzeilen die Geschwindigkeitsuntergrenze nicht zwingend unterschritten sein muss.

Unter Herausfiltern von Bildzeilen ist im Sinne der vorliegenden Erfindung eine weitergehende Verarbeitung von Bildzeilen zu verstehen, insbesondere eine Verarbeitung im Sinne eines Verwerfens oder einer Korrektur mit anschließender Verwendung für die Erstellung des zweidimensionalen Bildes des Objektes.

Unter TDI-Levels einer Zeilenkamera ist im Sinne der vorliegenden Erfindung eine Zahl von Pixelzeilensensoren der Zeilenkamera zu verstehen, sodass es sich bei einer solchen Zeilenkamera folglich um eine TDI-Zeilenkamera handelt. Die Gesamtanzahl der TDI-Levels entspricht daher der Gesamtanzahl der Pixelzeilensensoren der verwendeten TDI-Zeilenkamera.

In einer weiteren Ausführungsform erfolgt in Schritt A) das Bestimmen, ob eine Relativgeschwindigkeit des Objektes gegenüber der Zeilenkamera während einem Belichten durch die Zeilenkamera eine vordefinierte Geschwindigkeitsuntergrenze unterschritten hat, zum Teil oder vollständig dadurch, dass die Eigenschaft, vorzugsweise die Helligkeit, zumindest eines Referenzpixels der Bildzeilen und/oder der zeitliche Verlauf der Eigenschaft, vorzugsweise der Helligkeit, des zumindest einen Referenzpixels der Bildzeilen bestimmt wird, wobei in Abhängigkeit von der so bestimmten Eigenschaft, insbesondere Helligkeit, und/oder dem so bestimmten zeitlichen Eigenschaftsverlauf, insbesondere zeitlichen Helligkeitsverlauf, bestimmt wird, ob die Geschwindigkeitsuntergrenze für eine Bildzeile unterschritten ist oder nicht, wobei die räumliche Referenzpixel-Position für alle Bildzeilen der Bildzeilendaten gleich und vordefiniert ist.

Damit ist es möglich, allein anhand der erfassten Bildzeilendaten zu identifizieren, ob die Geschwindigkeitsgrenze unterschritten wurde oder nicht.

In einer weiteren Ausführungsform erfolgt in Schritt A das Bestimmen, ob eine Relativgeschwindigkeit des Objektes gegenüber der Zeilenkamera während einem Belichten durch die TDI-Kamera eine vordefinierte Geschwindigkeitsuntergrenze unterschritten hat, zum Teil oder vollständig dadurch, dass für jede Bildzeile, insbesondere für ein Referenzpixel jeder Bildzeile, ein Verhältnis von Nutzsignal zu Störsignal bestimmt wird und in Abhängigkeit von dem so bestimmten Verhältnis bestimmt wird, ob die Relativgeschwindigkeit die Geschwindigkeitsuntergrenze für die betrachtete Bildzeile unterschritten hat.

Die der Erfindung zugrunde liegende Aufgabe wird auch gelöst durch ein Datenverarbeitungssystem umfassend eine Berechnungsvorrichtung, insbesondere einen physischen Prozessor, virtuellen Prozessor oder Computer, wobei die Berechnungsvorrichtung derart ausgebildet und/oder eingerichtet ist, dass die Berechnungsvorrichtung ein computer-implementiertes Verfahren gemäß einer der voranstehenden Ausführungsformen eines erfindungsgemäßen computer-implementierten Verfahren ausführt.

Die der Erfindung zugrunde liegende Aufgabe wird auch gelöst durch ein computerlesbares Speichermedium mit einem darauf gespeicherten Computerprogramm, das bei Ausführung auf einem Computersystem ein Verfahren gemäß einer der voranstehenden Ausführungsformen eines erfindungsgemäßen computer-implementierten Verfahren ausführt.

Die der Erfindung zugrunde liegende Aufgabe wird auch gelöst durch prozessierte Bildzeilendaten erhältlich durch ein Verfahren gemäß einer der voranstehenden Ausführungsformen eines erfindungsgemäßen computer-implementierten Verfahren.

Die der Erfindung zugrunde liegende Aufgabe wird auch gelöst durch ein Verfahren zum Analysieren eines sich relativ zu einer Zeilenkamera, insbesondere einer TDI-Zeilenkamera, bewegenden Objektes mit den Schritten:
AA) Bereitstellen des zu analysierenden Objektes und der Zeilenkamera, sodass sich das zu analysierende Objekt zumindest temporär gegenüber der Zeilenkamera bewegt;
BB) Ausrichten und Betreiben der Zeilenkamera, sodass die Zeilenkamera zeilenweise Bildzeilen des zu analysierenden Objekts mit einer zeitlichen Abfolge erfasst;
CC) Prozessieren der in Schritt BB erfassten und die zeitliche Abfolge aufweisenden Bildzeilen, welche zusammengenommen Bildzeilendaten bilden, mittels eines computer-implementierten Verfahrens gemäß einer der voranstehenden Ausführungsformen eines erfindungsgemäßen computer-implementierten Verfahrens.

In einer Ausführungsform umfasst das vorgenannte Verfahren folgenden weiteren Schritt:
DD) Anordnen eines Referenzelements im Sichtfeld der Zeilenkamera in Schritt BB), sodass jede von der Zeilenkamera erfasste Bildzeile neben dem zu analysierenden Objekt zusätzlich zumindest bereichsweise das Referenzelement erfasst, wobei das Referenzelement stationär gegenüber der Zeilenkamera angeordnet ist;
wobei in Schritt DD) vorzugsweise ein computer-implementiertes Verfahren ausgeführt wird, bei welchem in Schritt A das Bestimmen, ob eine Relativgeschwindigkeit des Objektes gegenüber der Zeilenkamera während einem Belichten durch die Zeilenkamera eine vordefinierte Geschwindigkeitsuntergrenze unterschritten hat, zum Teil oder vollständig dadurch erfolgt, dass die Eigenschaft, vorzugsweise die Helligkeit, zumindest eines Referenzpixels der Bildzeilen und/oder der zeitliche Verlauf der Eigenschaft, vorzugsweise der Helligkeit, des zumindest einen Referenzpixels der Bildzeilen bestimmt wird, wobei in Abhängigkeit von der so bestimmten Eigenschaft, insbesondere Helligkeit, und/oder dem so bestimmten zeitlichen Eigenschaftsverlauf, insbesondere zeitlichen Helligkeitsverlauf, bestimmt wird, ob die Geschwindigkeitsuntergrenze für eine Bildzeile unterschritten ist oder nicht, wobei die räumliche Referenzpixel-Position für alle Bildzeilen der Bildzeilendaten gleich und vordefiniert ist, und das Referenzelement derart angeordnet ist, dass das Referenzpixel jeder Bildzeile das Referenzelement zumindest bereichsweise erfasst.

In einer weiteren Ausführungsform ist in Schritt AA) das Objekt eine sich auf einem linearen Förderband mit einer variierenden Geschwindigkeit, insbesondere schubweise, bewegende Materialbahn, beispielsweise ein als Materialbahn bereitgestelltes Solarzellen-Paneel, wobei die Zeilenkamera derart ausgerichtet ist, dass sie senkrecht zur Vorschubrichtung der Materialbahn ausgerichtete Bildzeilen erfasst.

Insbesondere kann die Zeilenkamera auch derart betrieben und mit einer Vorschubvorrichtung, wie zum Beispiel einem Förderband, auf der das Objekt zumindest temporär transportiert wird, synchronisiert sein, dass mit einem Leuchtmittel, insbesondere einem Blitzlichtmittel, das Objekt ausgeleuchtet wird, wenn sich das Objekt relativ zur Zeilenkamera bewegt, und das Objekt mit dem Leuchtmittel nicht ausgeleuchtet wird, wenn sich das Objekt nicht relativ zur Zeilenkamera bewegt. Weiterhin kann dann insbesondere eine Referenzplatte im Sichtfeld der Zeilenkamera vorgesehen sein, die derart ausgerichtet und angeordnet ist, dass sie unabhängig von der Bewegung des Objektes fest gegenüber der Zeilenkamera angeordnet ist und sich somit im Betrieb der Vorschubvorrichtung nie relativ zur Zeilenkamera bewegt. Die Zeilenkamera erfasst dann zumindest immer einen Pixel, dessen bildlicher Inhalt die Referenzplatte wiedergibt, und als Referenzpixel - wie zum Beispiel oben beschrieben - verwendet werden kann. Denn unabhängig von dem zu erfassenden Objekt und dessen Struktur weist ein solches Referenzpixel dann aufgrund der Kopplung von Leuchtmittel und Vorschubvorrichtung immer eine vordefinierte Helligkeit auf, und zwar in Abhängigkeit davon, ob sich das Objekt gegenüber der Zeilenkamera bewegt oder ob das Objekt relativ zur Zeilenkamera steht. Anhand der Helligkeit des Referenzpixels können Bildzeilendaten dann entweder einem Bild-Datenspeicher zugeordnet werden, in dem durch die Abfolge von Bildzeilendaten ein 2-dimensionales Bild des Objektes generiert wird oder eben in einen zusätzlichen Auslesespeicher geschoben oder direkt verworfen werden.

Die der Erfindung zugrunde liegende Aufgabe wird auch gelöst durch eine Vorrichtung zum Analysieren eines Objektes, das sich zumindest temporär relativ zu einer Zeilenkamera bewegt, wobei die Vorrichtung die Zeilenkamera, die insbesondere eine TDI-Zeilenkamera sein kann, umfasst, wobei die Zeilenkamera derart gegenüber einem Beförderungsmittel anordbar und ausrichtbar ist, dass ein durch das Beförderungsmittel bewegtes Objekt in ein Sichtfeld der Zeilenkamera gelangt, wobei die Vorrichtung ein Referenzelement, insbesondere eine Referenzplatte, umfasst, wobei das Referenzelement derart ausgebildet und angeordnet ist, dass das Referenzelement ortsfest im Sichtfeld der Zeilenkamera angeordnet ist. Dabei ist das Referenzelement insbesondere derart ortsfest im Sichtfeld der Zeilenkamera angeordnet, dass sich das Referenzelement im Betrieb des Beförderungsmittels nicht relativ zur Zeilenkamera bewegt. Diese Vorrichtung ermöglicht ein Bestimmen, ob eine Relativgeschwindigkeit des Objektes gegenüber der Zeilenkamera während dem Belichten durch die Zeilenkamera eine vordefinierte Geschwindigkeitsuntergrenze unterschritten hat, ohne dass zwingend weitere Sensorik außer der Zeilenkamera selbst benötigt wird.

Gemäß einer Ausführungsform der Vorrichtung umfasst die Vorrichtung das Beförderungsmittel, insbesondere ein lineares Förderband, wobei das Beförderungsmittel derart ausgebildet ist, dass das Objekt relativ zu der Zeilenkamera bewegbar ist.

Das Referenzelement kann insbesondere eine Referenzplatte sein. Das Referenzelement kann insbesondere fest mit der Zeilenkamera über eine Halterungseinrichtung verbunden sein. Das Referenzelement kann insbesondere aus einem Metall-aufweisenden und/oder Kunststoff-aufweisenden Material bestehen. Das Referenzelement kann insbesondere eine helle Farbe aufweisen, z.B. weiß-farbig ausgebildet sein.

Gemäß einer Ausführungsform der Vorrichtung ist das Referenzelement derart ausgebildet und angeordnet, dass das Referenzelement in einem von der Zeilenkamera erfassten Bild mindestens ein Pixel der Zeilenkamera ausfüllt, vorzugsweise eine Anzahl von Pixeln aus dem geschlossenen Intervall [1,5], besonders bevorzugt eine Anzahl von Pixeln aus dem geschlossenen Intervall [1,3] ausfüllt.

Die der Erfindung zugrunde liegende Aufgabe wird auch gelöst durch ein System, insbesondere ein System zur Durchführung eines oben beschriebenen Verfahrens zum Analysieren eines sich relativ zu einer Zeilenkamera, insbesondere einer TDI-Zeilenkamera, bewegenden Objektes, wobei das System eine Vorrichtung gemäß einer der oben beschriebenen Ausführungsformen umfasst, wobei das System derart ausgebildet und eingerichtet ist, dass in Abhängigkeit von einer Eigenschaft eines Pixels, mit dem das Referenzelement erfasst wird, bestimmt wird, ob ein durch das Beförderungsmittel bewegtes Objekt während dem Belichten durch die Zeilenkamera gegenüber der Zeilenkamera eine vordefinierte Geschwindigkeitsuntergrenze unterschritten hat. Die Eigenschaft des Pixels ist insbesondere die Helligkeit des Pixels.

Weitere Vorteile, Merkmale und Anwendungsmöglichkeiten der vorliegenden Erfindung werden anhand der nachfolgenden Beschreibung verschiedener Ausführungsformen deutlich.

Es zeigen schematisch:
- Fig. 1:: eine Ausführungsform eines erfindungsgemäßen Datenverarbeitungssystems mit einer Zeilenkamera.
- Fig. 2:: das Prinzip einer TDI-Zeilenkamera;
- Fig. 3:: Auszüge aus einer Ausführungsform eines erfindungsgemäßen Verfahrens zum Betreiben einer TDI-Zeilenkamera;
- Fig. 4:: eine weitere Ausführungsform eines erfindungsgemäßen Datenverarbeitungssystems mit einer Zeilenkamera.

Die Vorteile der vorliegenden Erfindung werden besonders gut deutlich, wenn zunächst das grundlegende Prinzip einer Zeilenkamera 1, insbesondere einer dauerbelichteten Zeilenkamera 1 wie einer TDI-Zeilenkamera, betrachtet wird.

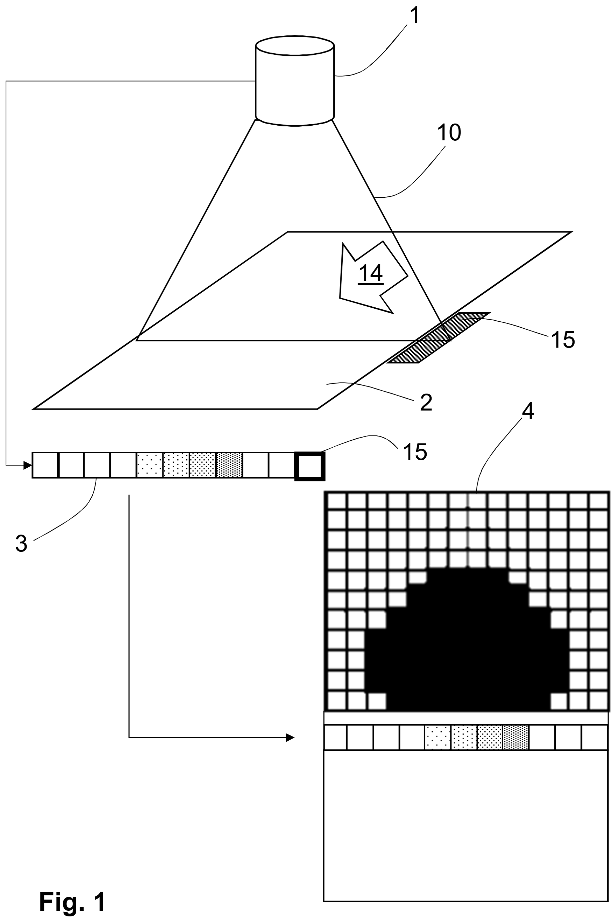

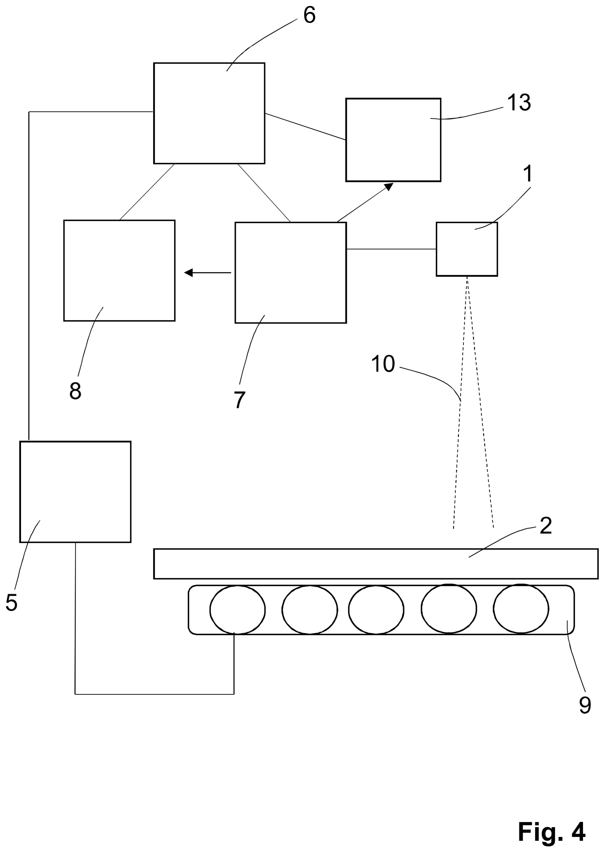

In Fig. 1, welche Auszüge aus einem erfindungsgemäßen Datenverarbeitungssystem zeigt, ist u. a. eine Zeilenkamera 1 zu sehen, deren Sichtfeld 10 auf ein bahnförmiges Objekt 2 gerichtet ist. Das Objekt 2 bewegt sich dabei entlang einer Vorschubrichtung 14 mittels einer hier in Fig. 1 nicht im Detail gezeigten Vorschubvorrichtung 9 (eine solche ist in Fig. 4 gezeigt), beispielweise mittels eines hierfür vorgesehenen Förderbands. Die Zeilenkamera 1 ist dabei derart ausgerichtet, dass als Bildzeilendaten 3 erfassten Bildzeilen sich im Wesentlichen senkrecht zur Vorschubrichtung 14 erstrecken. Grundsätzlich sind aber auch andere Anordnungen mit einer Winkelstellung kleiner 90 Grad zwischen Bildzeilen und Vorschubrichtung 14 möglich.

Die Bildzeilendaten 3 beinhalten jeweils eine eindimensionale Pixelzeile. Gleichzeitig ist die Zeilenkamera 1 derart mit der Vorschubvorrichtung 9 synchronisiert, dass kontinuierlich Bildzeilendaten 3, die eine einzelne Bildzeile in Form einer eindimensionalen Pixelzeile enthalten, ausgelesen werden und einer Abfolge 4 von Bildzeilendaten 3 hinzugefügt werden, sodass sich schlussendlich aus der Abfolge 4 der ausgelesenen Bildzeilendaten ein zwei-dimensionales Bild des sich bewegenden Objekts 2 ergibt.

Weist die Zeilenkamera 1 nur einen einzigen Pixelzeilensensor auf, mit dem eine Pixelzeile erfasst werden kann, so ist das Verfahren auf bestimmte Anwendungsbereiche beschränkt. Insbesondere darf die Vorschubgeschwindigkeit des Objektes 2 dann - wie bereits eingangs erwähnt - nicht zu groß gewählt werden, damit die Belichtungszeiten ausreichend lang sind, um ein qualitativ verwertbares Bild erzeugen zu können.

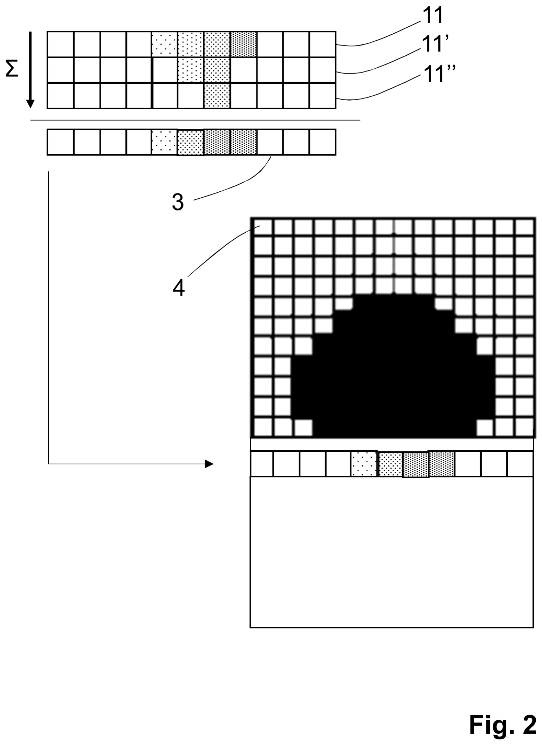

In Fig. 2 ist vor diesem Hintergrund u.a. das Prinzip einer TDI-Zeilenkamera 1 gezeigt, bei der mehrere (hier: drei) entlang der Vorschubrichtung nebeneinander angeordnete Bildzeilen durch entsprechend mehrere (hier: drei) entlang der Vorschubrichtung nebeneinander angeordnete Pixelzeilensensoren erfasst werden. Anschließend werden die erfassten Signale pixel-weise - entlang der Vorschub-Richtung - aufsummiert, sodass wiederum eine einzelne Bildzeile von der TDI-Kamera bestimmt und zur weiteren Verarbeitung zu Verfügung gestellt wird. Durch die Verwendung mehrerer in Vorschubrichtung betrachtet nebeneinanderliegender Zeilensensoren kann eine deutlich höhere Lichtausbeute erzielt werden, sodass mit einer TDI-Zeilenkamera 1 auch sich schnell bewegende Objekte 2 mit einer ausreichend guten Qualität untersucht werden können. Für dieses Verfahrensart ist es notwendig, dass die Zeilensensoren im Dauerbelichtungszustand arbeiten. Die Photozellen der TDI-Zeilenkamera 1 detektieren mit anderen Worten durchgängig Photonen.

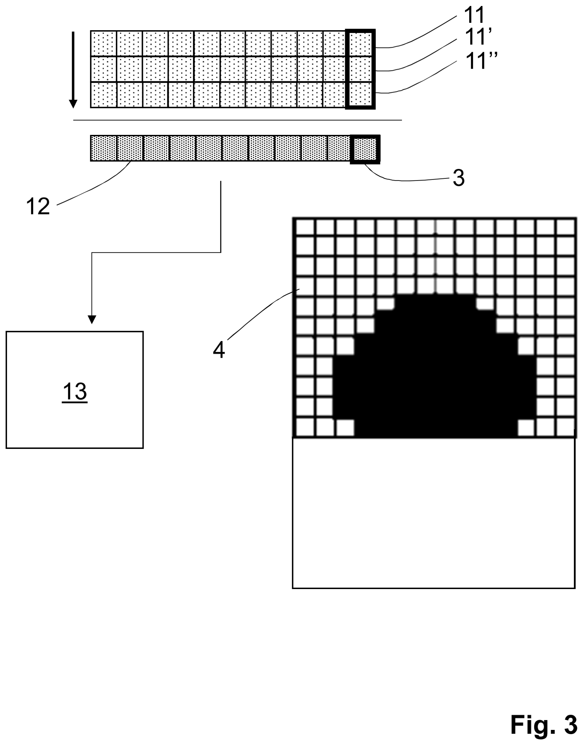

Solange sich das Objekt 2 kontinuierlich bewegt und ein regelmäßiges Auslesen der Pixelspeicher erfolgt, liefert eine TDI-Zeilenkamera 1 in der Praxis sehr gute Ergebnisse. Wird das Objekt 2 aber beispielsweise nur schubweise bewegt, sodass das Objekt 2 zwischendurch stillsteht, kommt es aufgrund der Dauerbelichtung dazu, dass die Zeilensensoren fortwährend Photonen erfassen und die hinter jedem Pixel stehenden Pixeldatenspeicher bis zur Sättigung zulaufen. Die entsprechenden Bildzeilen stellen das zu erfassende Objekt 2 dann nicht mehr richtig dar. Zum Beispiel kann es dazu kommen, dass eigentlich vorhandenen Kontraste aufgrund der Sättigung der Sensoren nicht mehr zu sehen sind. Ein entsprechender Zustand, in dem alle Pixeldatenspeicher der Pixelzeile zulaufen, ist in Fig. 3 gezeigt.

Mit dem ebenfalls in Fig. 3 dargestellten erfindungsgemäßen Verfahren werden diese Pixeldatenspeicher nun hochfrequent ausgelesen und die dabei ausgelesenen Bildzeilendaten 3 nicht der Abfolge 4 von Bildzeilendaten hinzugefügt, sondern in einen Auslesespeicher verschoben oder unmittelbar gelöscht. Dies erfolgt als Schritt B des erfindungsgemäßen Verfahrens. Dieser Schritt B erfolgt in Abhängigkeit davon, ob in einem Schritt A festgestellt worden ist, dass das Objekt 2 eine Relativgeschwindigkeitsuntergrenze unterschritten hat. Erhöht sich die Relativgeschwindigkeit nach einem Unterschreiten anschließend wieder und übersteigt die Geschwindigkeitsuntergrenze, wechselt das System in Abhängigkeit vom Zeitpunkt des Überschreitens wieder in den zuvor beschriebenen Modus, den Normbetrieb, sodass das 2-dimensionale Bild des Objektes um weitere Bildzeilendaten 3 ergänzt wird.

Das Abscannen des Objektes erfolgt mit anderen Worten in einem Stop-and-Go-Betrieb. Wenn sich das Objekt nicht bewegt, wird der Bild-Datenspeicher 8 nicht weiter beschrieben (stop). Bewegt sich das Objekt, wird der Bild-Datenspeicher 8 beschrieben (go).

Die Feststellung des Schrittes A, ob eine Geschwindigkeitsgrenze unterschritten worden ist, kann bei der in Fig. 3 gezeigten Ausführungsform beispielweise anhand eines Referenzpixels 12 erfolgen. Die TDI-Zeilenkamera 1 ist dabei - wie in Fig. 1 gezeigt - derart ausgerichtet und das System derart ausgebildet, dass das Referenzpixel 12 eine fest gegenüber der TDI-Zeilenkamera installierte Referenzplatte 15 erfasst. Die Relativgeschwindigkeit von Zeilenkamera 1 und Referenzplatte 15 ist folglich immer Null. Das System und die Referenzplatte 15 sind dabei derart ausgebildet, dass die im Referenzpixeldatenspeicher gesammelte Anzahl an Photonensignalen oder mit anderen Worten die erfasste Helligkeit nach einem vordefinierten Verhalten mit der Relativgeschwindigkeit des zu erfassenden Objektes korreliert. Wird eine bestimmte Grenze für die Anzahl von Photonen überschritten, weiß eine Steuereinheit 6 des Systems (hier: ein Signalprozessor), dass die Relativgeschwindigkeit eine bestimmte Untergrenze unterschritten hat. Die Verwendung eines solchen Referenzpixels 12 ermöglicht das erfindungsgemäße Prozessieren der Bildzeilendaten 3 unabhängig von weiteren zusätzlichen Daten. Das Prozessiren kann - mit anderen Worten - alleine auf der Basis von Bildzeilendaten 3 erfolgen. Es können auch mehrere Referenzpixel 12 innerhalb einer aufsummierten Bildzeile vorgesehen sein.

Darüber hinaus kann die Referenzplatte 15 bzw. das Signal des Referenzpixels 12 dazu verwendet werden, eine ggf. auftretende Beschleunigung des zu erfassenden Objektes 2 gegenüber der Zeilenkamera 1 zu bestimmen. In Abhängigkeit von der Beschleunigung können Bildzeilendaten 3, die bei Relativgeschwindigkeiten, die zwischen der Geschwindigkeitsuntergrenze und einer vordefinierten Normgeschwindigkeit liegen, erfasst wurden, mit einer Korrekturfunktion verrechnet werden, um sie anschließend der Abfolge von Bildzeilendaten 4 hinzufügen. Mit anderen Worten werden diese Bildzeilendaten 3, die nicht bei Normgeschwindigkeiten aber oberhalb der Geschwindigkeitsuntergrenze erfasst worden sind, mit einer vordefinierten Gewichtung bewertet - durch eine vordefinierte Korrekturfunktion - und für die Erfassung des zweidimensionalen Bildes verwendet.

Die Feststellung, ob eine Geschwindigkeitsuntergrenze unterschritten worden ist oder wieder überschritten wird, kann zusätzlich oder alternativ mittels eines zusätzlichen Signals erfolgen, welches im Betrieb der TDI-Zeilenkamera 1 an der Vorschubvorrichtung 9 erfasst wird. Ein hierfür geeignetes System ist schematisch in Fig. 4 gezeigt. Hierbei wird das zu erfassende bahnförmiges Objekt 2 auf einem Förderband entlang einer Vorschubrichtung 14 transportiert. Gleichzeitig erfasst die TDI-Zeilenkamera 1 - wie in Fig. 1 - kontinuierlich Bildzeilendaten 3, deren Bildzeilen sich im Wesentlichen senkrecht zur Vorschubrichtung 14 erstrecken. Ein Signalgeber 5, der als Drehgeber ausgebildet sein kann, erfasst einen Zustand der Vorschubvorrichtung 9, insbesondere die Drehwinkelstellung einer Welle des Förderbandes oder direkt die Geschwindigkeit des Förderbandes. Hierdurch kann die Relativgeschwindigkeit des Objekts 2 gegenüber der Zeilenkamera 1 bestimmt werden. Der Signalgeber 5 ist mit einer Steuereinheit 6, beispielweise einem Prozessor, verbunden, wobei die Steuereinheit 6 in Abhängigkeit davon, ob die Relativgeschwindigkeit des Objektes 2 oberhalb oder unterhalb der Geschwindigkeitsuntergrenze ist, folgendes veranlasst: nämlich dass die Bildzeilendaten 3 mit einer ersten Auslesefrequenz, die mit der Relativgeschwindigkeit von Objekt und TDI-Zeilenkamera synchronisiert ist, ausgelesen und einer Abfolge 4 von Bildzeilendaten hinzugefügt werden, indem sie in einen hierfür vorgesehenen Bild-Datenspeicher 8 geschrieben werden, um mit dieser Abfolge 4 ein zweidimensionales Bild des Objektes 2 zu erhalten, wenn die Relativgeschwindigkeit oberhalb der Geschwindigkeitsuntergrenze ist; oder dass die Bildzeilendaten mit einer zweiten Auslesefrequenz, die größer als die erste Auslesefrequenz ist, ausgelesen und verworfen werden, beispielsweise indem sie in einen gesonderten hierfür vorgesehen Auslese-Datenspeicher 7 verschoben werden, wenn die Geschwindigkeit unterhalb der Geschwindigkeitsuntergrenze ist.

### Bezugszeichenliste

- 1: Zeilenkamera / Kamerasensor
- 2: Bahnförmiges Objekt
- 3: Bildzeilendaten
- 4: Abfolge von Bildzeilendaten
- 5: Signalgeber, insbesondere Drehgeber
- 6: Steuereinheit / Signalprozessor
- 7: Auslese-Datenspeicher
- 8: Bild-Datenspeicher
- 9: Vorschubvorrichtung / Förderband
- 10: Sichtfeld
- 11: Integrations-Pixelzeile
- 11': Integrations-Pixelzeile
- 11": Integrations-Pixelzeile
- 12: Referenzpixel
- 13: Auslesespeicher
- 14: Vorschubrichtung
- 15: Referenzplatte

## Patentansprüche

1. Computer-implementiertes Verfahren zum Prozessieren von digitalen Bildzeilendaten, die von einer Zeilenkamera, insbesondere TDI-Zeilenkamera, durch das Belichten eines Objektes, das sich zumindest temporär relativ zur Zeilenkamera bewegt, erzeugt worden sind, sodass die Bildzeilendaten eine Vielzahl eindimensionaler und mit einer zeitlichen Abfolge versehender Bildzeilen umfassen, mit den Schritten:
A) Bestimmen, ob eine Relativgeschwindigkeit des Objektes gegenüber der Zeilenkamera während dem Belichten durch die Zeilenkamera eine vordefinierte Geschwindigkeitsuntergrenze unterschritten hat;
B) Prozessieren der Bildzeilendaten in Abhängigkeit davon, ob für eine Bildzeile ein Unterschreiten der vordefinierten Geschwindigkeitsuntergrenze in Schritt A festgestellt worden ist;
C) Bereitstellen der mittels Schritt B prozessierten Bildzeilendaten.

2. Computer-implementiertes Verfahren gemäß Anspruch 1,
wobei das Bestimmen eines möglichen Unterschreitens der vordefinierten Geschwindigkeitsuntergrenze in Schritt A in Abhängigkeit von zusätzlich erfassten Geschwindigkeitswerten und/oder Positionswerten des Objektes und/oder in Abhängigkeit von zusätzlich erfassten Geschwindigkeitswerten und/oder Positionswerten der Zeilenkamera erfolgt.

3. Computer-implementiertes Verfahren gemäß Anspruch 2,
wobei die zusätzlich erfassten Geschwindigkeitswerte und/oder Positionswerte mit einem Signalgeber, insbesondere Drehgeber, erfasst werden.

4. Computer-implementiertes Verfahren gemäß Anspruch 3,
wobei das Bestimmen in Schritt A kontinuierlich mit einer Monitoring-Frequenz erfolgt, wobei in Schritt B ein Signalprozessor in einer ersten Konfiguration betrieben wird, in der der Signalprozessor Beleuchtungsblitze und mit einer ersten Auslesefrequenz Bildzeileneinzüge auslöst, wenn in Schritt A bestimmt wird, dass die Geschwindigkeitsuntergrenze nicht unterschritten ist,
und wobei in Schritt B ein Signalprozessor in einer zweiten Konfiguration betrieben wird, in der der Signalprozessor keinen Beleuchtungsblitz auslöst und mit einer zweiten Auslesefrequenz Bildzeileneinzüge auslöst, wenn in Schritt A bestimmt wird, dass die Geschwindigkeitsuntergrenze unterschritten ist,
wobei die zweite Auslesefrequenz größer, vorzugsweise zehn mal größer, als die erste Auslesefrequenz ist.

5. Computer-implementiertes Verfahren gemäß einem der voranstehenden Ansprüche, wobei das Bestimmen eines möglichen Unterschreitens der vordefinierten Geschwindigkeit in Schritt A in Abhängigkeit von den digitalen Bildzeilendaten, vorzugsweise ausschließlich in Abhängigkeit von den digitalen Bildzeilendaten erfolgt.

6. Computer-implementiertes Verfahren gemäß einem der voranstehenden Ansprüche, wobei das Prozessieren in Schritt B zumindest folgende Unterschritte umfasst:
B1) Herausfiltern von Bildzeilen, für die die Relativgeschwindigkeit des Objektes kleiner als die vordefinierte Geschwindigkeitsuntergrenze ist;
B2) Zusammenfügen der nach dem in Schritt B1 erfolgten Herausfiltern übriggebliebenen Bildzeilen, um die prozessierten Bildzeilendaten zu erhalten.

7. Computer-implementiertes Verfahren gemäß einem der voranstehenden Ansprüche, wobei das Prozessieren in Schritt B zumindest folgende Unterschritte umfasst:
B-i) Bestimmen einer Bildzeile innerhalb der zeitlichen Abfolge, bei der die Relativgeschwindigkeit des Objektes gegenüber der Zeilenkamera eine vordefinierte Geschwindigkeitsuntergrenze unterschritten hat;
B-ii) Herausfiltern der in Schritt B-i bestimmten Bildzeile und zumindest einer Bildzeile, die der in Schritt B-i bestimmten Bildzeile in der zeitlichen Abfolge unmittelbar zeitlich vor- oder nachsteht,
wobei vorzugsweise mehrere Bildzeilen, insbesondere eine Anzahl an Bildzeilen ausgewählt aus dem geschlossenen Intervall zwischen 4 und der Gesamtanzahl von TDI-Levels der Zeilenkamera, herausgefiltert werden, wobei diese Anzahl an Bildzeilen der in Schritt B-i bestimmten Bildzeile in der zeitlichen Abfolge unmittelbar zeitlich vor- oder nachstehen.

8. Computer-implementiertes Verfahren gemäß einem der voranstehenden Ansprüche, wobei in Schritt A das Bestimmen, ob eine Relativgeschwindigkeit des Objektes gegenüber der Zeilenkamera während einem Belichten durch die Zeilenkamera eine vordefinierte Geschwindigkeitsuntergrenze unterschritten hat, zum Teil oder vollständig dadurch erfolgt, dass die Eigenschaft, vorzugsweise die Helligkeit, zumindest eines Referenzpixels der Bildzeilen und/oder der zeitliche Verlauf der Eigenschaft, vorzugsweise der Helligkeit, des zumindest einen Referenzpixels der Bildzeilen bestimmt wird, wobei in Abhängigkeit von der so bestimmten Eigenschaft, insbesondere Helligkeit, und/oder dem so bestimmten zeitlichen Eigenschaftsverlauf, insbesondere zeitlichen Helligkeitsverlauf, bestimmt wird, ob die Geschwindigkeitsuntergrenze für eine Bildzeile unterschritten ist oder nicht, wobei die räumliche Referenzpixel-Position für alle Bildzeilen der Bildzeilendaten gleich und vordefiniert ist.

9. Computer-implementiertes Verfahren gemäß einem der voranstehenden Ansprüche, wobei in Schritt A das Bestimmen, ob eine Relativgeschwindigkeit des Objektes gegenüber der Zeilenkamera während einem Belichten durch die TDI-Kamera eine vordefinierte Geschwindigkeitsuntergrenze unterschritten hat, zum Teil oder vollständig dadurch erfolgt, dass für jede Bildzeile, insbesondere für ein Referenzpixel jeder Bildzeile, ein Verhältnis von Nutzsignal zu Störsignal bestimmt wird und in Abhängigkeit von dem so bestimmten Verhältnis bestimmt wird, ob die Relativgeschwindigkeit die Geschwindigkeitsuntergrenze für die betrachtete Bildzeile unterschritten hat.

10. Verfahren zum Analysieren eines sich relativ zu einer Zeilenkamera, insbesondere einer TDI-Zeilenkamera, bewegenden Objektes mit den Schritten:
AA) Bereitstellen des zu analysierenden Objektes und der Zeilenkamera, sodass sich das zu analysierende Objekt zumindest temporär gegenüber der Zeilenkamera bewegt;
BB) Ausrichten und Betreiben der Zeilenkamera, sodass die Zeilenkamera zeilenweise Bildzeilen des zu analysierenden Objekts mit einer zeitlichen Abfolge erfasst;
CC) Prozessieren der in Schritt BB erfassten und die zeitliche Abfolge aufweisenden Bildzeilen, welche zusammengenommen Bildzeilendaten bilden, mittels eines computer-implementierten Verfahrens gemäß einem der Ansprüche 1 bis 9.

11. Verfahren gemäß Anspruch 10, wobei das Verfahren folgenden weiteren Schritt umfasst:
DD) Anordnen eines Referenzelements im Sichtfeld der Zeilenkamera in Schritt BB), sodass jede von der Zeilenkamera erfasste Bildzeile neben dem zu analysierenden Objekt zusätzlich zumindest bereichsweise das Referenzelement erfasst, wobei das Referenzelement stationär gegenüber der Zeilenkamera angeordnet ist;
wobei in Schritt CC) vorzugsweise ein Verfahren gemäß Anspruch 8 ausgeführt wird und das Referenzelement derart angeordnet ist, dass das Referenzpixel jeder Bildzeile das Referenzelement zumindest bereichsweise erfasst.

12. Verfahren gemäß einem der Ansprüche 10 oder 11,
wobei in Schritt AA) das Objekt eine sich auf einem linearen Förderband mit einer variierenden Geschwindigkeit, insbesondere schubweise, bewegende Materialbahn, beispielsweise ein als Materialbahn bereitgestelltes Solarzellen-Paneel, ist,
wobei die Zeilenkamera derart ausgerichtet ist, dass sie senkrecht zur Vorschubrichtung der Materialbahn ausgerichtete Bildzeilen erfasst.

13. Vorrichtung zum Analysieren eines Objektes, das sich zumindest temporär relativ zu einer Zeilenkamera bewegt,
wobei die Vorrichtung die Zeilenkamera, die insbesondere eine TDI-Zeilenkamera sein kann, umfasst,
wobei die Zeilenkamera derart gegenüber einem Beförderungsmittel anordbar und ausrichtbar ist, dass ein durch das Beförderungsmittel bewegtes Objekt in ein Sichtfeld der Zeilenkamera gelangt,
**dadurch gekennzeichnet, dass**
die Vorrichtung ein Referenzelement, insbesondere eine Referenzplatte, umfasst, wobei das Referenzelement derart ausgebildet und angeordnet ist, dass das Referenzelement ortsfest im Sichtfeld der Zeilenkamera angeordnet ist.

14. Vorrichtung gemäß Anspruch 13,
wobei das Referenzelement derart ausgebildet und angeordnet ist, dass das Referenzelement in einem von der Zeilenkamera erfassten Bild mindestens ein Pixel der Zeilenkamera ausfüllt, vorzugsweise eine Anzahl von Pixeln aus dem geschlossenen Intervall [1,5], besonders bevorzugt eine Anzahl von Pixeln aus dem geschlossenen Intervall [1,3] ausfüllt.

15. System, insbesondere ein System zur Durchführung eines Verfahrens gemäß einem der Ansprüche 10 bis 12,
wobei das System eine Vorrichtung gemäß Anspruch 13 oder 14 umfasst,
wobei das System derart ausgebildet und eingerichtet ist, dass in Abhängigkeit von einer Eigenschaft eines Pixels, mit dem das Referenzelement erfasst wird, bestimmt wird, ob ein durch das Beförderungsmittel bewegtes Objekt während dem Belichten durch die Zeilenkamera gegenüber der Zeilenkamera eine vordefinierte Geschwindigkeitsuntergrenze unterschritten hat.
